(19) Europäisches Patentamt
European Patent Office
Office européen des brevets

(11) EP 4 417 633 A1

(12) EUROPEAN PATENT APPLICATION
published in accordance with Art. 153(4) EPC

(43) Date of publication:
**21.08.2024 Bulletin 2024/34**

(21) Application number: **22895521.7**

(22) Date of filing: **10.11.2022**

(51) International Patent Classification (IPC):
***C08F 290/06** (2006.01)* ***C08K 3/013** (2018.01)*
***C08K 3/38** (2006.01)* ***C08L 55/00** (2006.01)*
***C08L 63/00** (2006.01)* ***C08L 83/04** (2006.01)*

(52) Cooperative Patent Classification (CPC):
**C08F 290/06; C08K 3/013; C08K 3/38; C08L 55/00; C08L 63/00; C08L 83/04**

(86) International application number:
**PCT/JP2022/041838**

(87) International publication number:
**WO 2023/090239 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2021 JP 2021186945**

(71) Applicant: **Denka Company Limited**
**Tokyo 103-8338 (JP)**

(72) Inventors:
- **WADA, Kosuke**
  **Tokyo 103-8338 (JP)**
- **KANAI, Tomoyuki**
  **Tokyo 103-8338 (JP)**
- **FUKAO, Kenji**
  **Tokyo 103-8338 (JP)**
- **ARAI, Tatsumi**
  **Tokyo 103-8338 (JP)**
- **ONOZUKA, Masao**
  **Tokyo 103-8338 (JP)**
- **IWASAKI, Takayuki**
  **Tokyo 103-8338 (JP)**

(74) Representative: **Gulde & Partner**
**Patent- und Rechtsanwaltskanzlei mbB**
**Wallstraße 58/59**
**10179 Berlin (DE)**

# (54) COPOLYMER, SURFACTANT, RESIN COMPOSITION, AND HEAT DISSIPATION SHEET

(57) The copolymer of the present invention contains a (meth)acrylic based monomer unit A having an anionic group, a (meth)acrylic based monomer unit B having a cationic group, and a (meth)acrylic based monomer unit C other than the (meth)acrylic based monomer unit A and the (meth)acrylic based monomer unit B, and the (meth)acrylic based monomer unit C has a weight average molecular weight of 2,000 to 9,000. The surfactant of the present invention contains the copolymer of the present invention. The resin composition of the present invention contains a resin, the surfactant of the present invention, and an inorganic filler. The heat dissipation sheet of the present invention contains the resin composition of the present invention. The present invention can provide a copolymer that is capable of reducing the viscosity of a resin composition containing a resin and an inorganic filler, a surfactant containing the copolymer, a resin composition containing the surfactant and an inorganic filler, and a heat dissipation sheet containing the resin composition.

EP 4 417 633 A1

## Description

### Technical Field

The present invention relates to a copolymer, a surfactant, a resin composition, and a heat dissipation sheet.

### Background Art

In recent years, electric vehicles, such as electric cars, have been becoming widespread. A circuit board used in the on-board power system for an electric vehicle generally handles large voltage and current, and therefore generates a large amount of heat. The increase of the amount of heat generation may cause malfunction and failure of the circuit. Furthermore, the battery pack supplying electric power to the electric motor of the electric vehicle generates heat through repeated charging and discharging. The continuous use thereof at a high temperature may cause deterioration of the performance and the lifetime of the battery pack.

Additionally, these problems in heat generation occur not only in the electric vehicles, but also in electronic devices. The heat generation density inside the electronic device is increasing year by year due to the advance in capabilities and the reduction in size thereof, and there is an issue how to dissipate efficiently the heat generated during use.

A method has been used to remove the heat by bringing the heat generating part into contact with a cooling member although the details of the cooling mechanism may vary depending on the heat generating part. In this method, generally, the heat is removed by bringing the heat generating part into indirectly contact with the cooling member via a heat dissipation member since a gap between the heat generating member and the cooling member decreases the heat removal efficiency.

The heat dissipation member generally contains an inorganic filler in a resin. At this time, it is necessary to disperse the inorganic filler homogeneously in the resin. However, the inorganic filler tends to aggregate due to the attractive force (such as the van der Waals force) acting among the surfaces of the inorganic filler. Therefore, for dispersing the inorganic filler in the resin, for example, it is necessary to introduce a repulsive force to among the particles. Examples of the repulsive force include an electrostatic repulsive force and a steric hinderance repulsive force. Examples of the method of introducing a repulsive force to among the particles of the inorganic filler include a method of surface-treating the inorganic filler with a silane coupling agent (see, for example, PTL 1). The specific functional group is introduced to the surface of the inorganic filler with the silane coupling agent, and thereby the repulsive force among the inorganic filler can be enhanced.

### Citation List

#### Patent Literature

PTL 1: JP 2000-233907 A

### Summary of Invention

#### Technical Problem

However, an inorganic filler that has a stable surface, such as boron nitride, has a small amount of the functional group, such as an OH group, on the surface thereof. Therefore, an inorganic filler that has a stable surface, such as boron nitride, may be insufficient in modification of the surface of the inorganic filler with the silane coupling agent, and the inorganic filler cannot be sufficiently dispersed in the resin in some cases. As a result, the viscosity of the resin composition containing the resin and the inorganic filler is difficult to reduce, and the moldability of the resin composition is deteriorated in some cases.

The present invention has been made in view of the problems described above, and an object thereof is to provide a copolymer that is capable of reducing the viscosity of a resin composition containing a resin and an inorganic filler, a surfactant containing the copolymer, a resin composition containing the surfactant and an inorganic filler, and a heat dissipation sheet containing the resin composition.

#### Solution to Problem

The present inventors have made earnest investigations for solving the problems. As a result, it has been found that the problems can be solved by a (meth)acrylic based copolymer having particular constitutional units, and thus the

present invention has been completed.

That is, the present invention is as follows.

[1] A copolymer containing

a (meth)acrylic based monomer unit A having an anionic group,
a (meth)acrylic based monomer unit B having a cationic group, and
a (meth)acrylic based monomer unit C other than the (meth)acrylic based monomer unit A and the (meth)acrylic based monomer unit B,
the (meth)acrylic based monomer unit C having a weight average molecular weight of 2,000 to 9,000.

[2] The copolymer according to the item [1], in which the copolymer has

a content of the (meth)acrylic based monomer unit A of 30 to 80% by mol based on 100% by mol in total of the (meth)acrylic based monomer unit A, the (meth)acrylic based monomer unit B, and the (meth)acrylic based monomer unit C,
a content of the (meth)acrylic based monomer unit B of 0.1 to 5.0% by mol based on 100% by mol in total of the (meth)acrylic based monomer unit A, the (meth)acrylic based monomer unit B, and the (meth)acrylic based monomer unit C, and
a content of the (meth)acrylic based monomer unit C of 20 to 70% by mol based on 100% by mol in total of the (meth)acrylic based monomer unit A, the (meth)acrylic based monomer unit B, and the (meth)acrylic based monomer unit C.

[3] The copolymer according to the item [1] or [2], in which the copolymer has a weight average molecular weight of 40,000 to 80,000.
[4] The copolymer according to any one of the items [1] to [3], in which the (meth)acrylic based monomer unit C contains at least one kind of a skeleton selected from the group consisting of an oxyalkylene skeleton, a siloxane skeleton, a hydrocarbon skeleton, and a phosphodiester skeleton.
[5] The copolymer according to any one of the items [1] to [4], in which the anionic group contains at least one kind of a group selected from the group consisting of a carboxy group, a phosphate group, and a phenolic hydroxy group.
[6] The copolymer according to any one of the items [1] to [5], in which the cationic group contains at least one kind of a group selected from the group consisting of a primary amino group, a secondary amino group, a tertiary amino group, and a quaternary ammonium salt.
[7] The copolymer according to any one of the items [1] to [6], in which the copolymer is for a surface treatment of an inorganic filler contained in a resin composition used in a heat dissipation sheet.
[8] The copolymer according to the item [7], in which the inorganic filler is boron nitride.
[9] A surfactant containing the copolymer according to any one of the items [1] to [8].
[10] A resin composition containing a resin, the surfactant according to the item [9], and an inorganic filler.
[11] The resin composition according to the item [10], in which the resin is at least one kind of a resin selected from a silicone resin and an epoxy resin.
[12] The resin composition according to the item [10] or [11], in which the inorganic filler is boron nitride.
[13] A heat dissipation sheet containing the resin composition according to any one of the items [10] to [12].

## Advantageous Effects of Invention

The present invention can provide a copolymer that is capable of reducing the viscosity of a resin composition containing a resin and an inorganic filler, a surfactant containing the copolymer, a resin composition containing the surfactant and an inorganic filler, and a heat dissipation sheet containing the resin composition.

## Description of Embodiments

While an embodiment of the present invention (which may be hereinafter referred to as a "present embodiment") will be described in detail below, the present invention is not limited thereto, and various modifications can be made therein within a range that does deviate from the substance thereof. In the present invention, the "(meth)acrylic based monomer unit" means both a methacrylic acid based monomer unit and an acrylic based monomer unit.

[Copolymer]

The copolymer of the present embodiment contains a (meth)acrylic based monomer unit A having an anionic group, a (meth)acrylic based monomer unit B having a cationic group, and a (meth)acrylic based monomer unit C other than the (meth)acrylic based monomer unit A and the (meth)acrylic based monomer unit B, and the (meth)acrylic based monomer unit C has a weight average molecular weight of 2,000 to 9,000. The copolymer of the present embodiment can significantly reduce the viscosity of a resin composition containing a resin and an inorganic filler due to the configuration described above. The mechanism thereof is considered as follows.

An interface where two different substances are brought into contact with each other, such as a surface of an inorganic filler dispersed in a resin, causes a prescribed potential difference, and attracts a counterion to form an electric double layer including a fixed layer and a diffusion double layer. The extent of the counterion on the surface of the inorganic filler is also referred to as the thickness of the electric double layer. When the inorganic filler approaches each other, the counterions overlap to increase the electrostatic repulsive force. It is considered that the copolymer of the present embodiment has a function of increasing the thickness of the electric double layer through the amphoterism, i.e., the anionic group and the cationic group, in the molecule thereof. More specifically, one of the anionic group and the cationic group of the copolymer is disposed as the counterion in the vicinity of the surface of the inorganic filler. The other group that does not function as the counterion (subsidiary ion) is disposed away from the vicinity of the surface of the inorganic filler, at which a subsidiary ion layer can be further formed thereby. It is considered that the thickness of the electric double layer on the surface of the inorganic filler is increased in this manner, and thereby the electrostatic repulsive force can be produced further away from the surface of the inorganic filler where the van der Waals force acts, resulting in an improvement of the dispersibility of the inorganic filler. As a result, it is considered that the viscosity of the resin composition containing the resin and the inorganic filler can be significantly reduced by the copolymer of the present embodiment.

In the present embodiment, the "monomer" means a monomer having a polymerizable unsaturated bond before polymerization, and the "monomer unit" means a repeating unit constituting a part of a copolymer after polymerization, derived from a prescribed monomer. In the following description, the "(meth)acrylic based monomer unit A" may also be referred simply to as a "unit A", the "(meth)acrylic based monomer unit B" may also be referred simply to as a "unit B", and the "(meth)acrylic based monomer unit C" may also be referred simply to as a "unit C".

((Meth)acrylic based Monomer Unit A having Anionic Group)

The (meth)acrylic based monomer unit A is a repeating unit having an anionic group. Examples of the anionic group include a carboxy group, a phosphate group, a phenolic hydroxy group, and a sulfonate group, while not particularly limited. Among these, one or more kind selected from the group consisting of a carboxy group, a phosphate group, and a phenolic hydroxy group is preferred, and a carboxy group is more preferred. Such a group contained provides a tendency of further enhancing the dispersibility of the inorganic filler. As a result, the copolymer of the present embodiment can sufficiently reduce the viscosity of the resin composition containing the resin and the inorganic filler.

The unit A preferably further has an electron withdrawing group bonded to the anionic group. The electron withdrawing group is not particularly limited, as long as having a function of stabilizing the anion of the anionic group. For example, an acrylic based monomer containing an electron withdrawing substituent, such as a halogen element, on the carbon atom at the $\alpha$-position of the carboxy group may be used. Such a group provides a tendency of further enhancing the dispersibility of the inorganic filler. As a result, the copolymer of the present embodiment can sufficiently reduce the viscosity of the resin composition containing the resin and the inorganic filler.

It is preferred that the unit A does not have an electron donating group bonded to the anionic group, or has a group having a low electron donating capability bonded thereto. The electron donating group is not particularly limited, as long as having a function of destabilizing the anion of the anionic group. For example, an acrylic based monomer that does not contain an electron donating group, such as a methyl group, as a substituent on the carbon atom at the $\alpha$-position of the carboxy group may be used. Such a structure provides a tendency of further enhancing the dispersibility of the inorganic filler. As a result, the copolymer of the present embodiment can sufficiently reduce the viscosity of the resin composition containing the resin and the inorganic filler.

Examples of the (meth)acrylic based monomer include acrylic acid, methacrylic acid, acid phosphoxypropyl methacrylate, acid phosphoxypolyoxyethylene glycol monomethacrylate, acid phosphoxypolyoxypropylene glycol monomethacrylate, phosphoric acid-modified epoxy acrylate, 2-acryloyloxyethyl acid phosphate, 2-methacryloyloxyethyl acid phosphate, 4-hydroxyphenyl acrylate, 4-hydroxyphenyl methacrylate, 2-methacryloyloxyethylsuccinic acid, and 2-acrylamido-2-methylpropanesulfonic acid, while not particularly limited. Among these, acrylic acid, 2-methacryloyloxyethyl acid phosphate, 4-hydroxyphenyl methacrylate, and 2-acrylamido-2-methylpropanesulfonic acid are preferred, and acrylic acid is more preferred. The unit derived from such a monomer contained provides a tendency of further enhancing the affinity of the copolymer to the inorganic filler, and further enhancing the dispersibility of the inorganic filler. As a

result, the copolymer of the present embodiment can sufficiently reduce the viscosity of the resin composition containing the resin and the inorganic filler. One kind of the unit A may be used alone, or two or more kinds thereof may be used in combination.

((Meth)acrylic based Monomer Unit B having Cationic Group)

The (meth)acrylic based monomer unit B is a repeating unit having a cationic group. The cationic group is preferably one or more kind selected from the group consisting of a primary amino group, a secondary amino group, a tertiary amino group, and a quaternary ammonium salt, while not particularly limited. Among these, a tertiary amino group is more preferred. Such a group contained provides a tendency of further enhancing the dispersibility of the inorganic filler. As a result, the copolymer of the present embodiment can sufficiently reduce the viscosity of the resin composition containing the resin and the inorganic filler.

The unit B preferably further has an electron donating group bonded to the cationic group. The electron donating group is not particularly limited, as long as having a function of stabilizing the cation of the cationic group. For example, an acrylic based monomer containing an electron donating substituent, such as a methyl group, on the carbon atom at the $\alpha$-position of the amino group may be used. Such a group provides a tendency of further enhancing the dispersibility of the inorganic filler. As a result, the copolymer of the present embodiment can sufficiently reduce the viscosity of the resin composition containing the resin and the inorganic filler.

It is preferred that the unit B does not have an electron withdrawing group bonded to the cationic group, or has a group having a low electron withdrawing capability bonded thereto. The electron withdrawing group is not particularly limited, as long as having a function of destabilizing the cation of the cationic group. For example, an acrylic based monomer that does not contain an electron withdrawing group, such as a carboxyl group, as a substituent on the carbon atom at the $\alpha$-position of the amino group may be used. Such a structure provides a tendency of further enhancing the dispersibility of the inorganic filler. As a result, the copolymer of the present embodiment can sufficiently reduce the viscosity of the resin composition containing the resin and the inorganic filler.

Examples of the (meth)acrylic based monomer include 1-aminoethyl acrylate, 1-aminopropyl acrylate, 1-aminoethyl methacrylate, 1-aminopropyl methacrylate, dimethylaminoethyl methacrylate, diethylaminoethyl methacrylate, t-butylaminoethyl (meth)acrylate, dimethylaminoethyl methacrylate quaternary salt, 1,2,2,6,6-pentamethyl-4-piperidyl methacrylate, 2,2,6,6-tetramethyl-4-piperidyl methacrylate, and dimethylaminoethyl acrylate benzyl chloride quaternary salt, while not particularly limited. Among these, 1,2,2,6,6-pentamethyl-4-piperidyl methacrylate and 2,2,6,6-tetramethyl-4-piperidyl methacrylate are preferred, and 1,2,2,6,6-pentamethyl-4-piperidyl methacrylate is more preferred. The unit derived from such a monomer contained provides a tendency of further enhancing the affinity of the copolymer to the inorganic filler, and further enhancing the dispersibility of the inorganic filler. As a result, the copolymer of the present embodiment can sufficiently reduce the viscosity of the resin composition containing the resin and the inorganic filler. One kind of the unit B may be used alone, or two or more kinds thereof may be used in combination.

((Meth)acrylic based Monomer Unit C)

The (meth)acrylic based monomer unit C is a (meth)acrylic based monomer unit other than the unit A and the unit B, and is a (meth)acrylic based monomer that does not contain a cationic group and an anionic group in the molecule thereof.

Assuming that the copolymer of the present embodiment is mixed in a resin composition containing a thermoplastic resin or a thermosetting resin, the (meth)acrylic based monomer C preferably has a skeleton that has high affinity or compatibility with the resin used in the resin composition. Examples of the skeleton include an amphiphilic skeleton, such as an oxyalkylene skeleton, a hydrophobic skeleton, such as a siloxane skeleton, e.g., dimethylsiloxane, and a hydrocarbon skeleton, e.g., an alkyl and an aryl, and a hydrophilic skeleton, such as a phosphate diester skeleton, while not particularly limited. Among these, an oxyalkylene skeleton, a siloxane skeleton, and a hydrocarbon skeleton are preferred, a siloxane skeleton and a hydrocarbon skeleton are more preferred, and a siloxane skeleton is further preferred. Such a skeleton contained provides a tendency of further enhancing the compatibility between the copolymer of the present embodiment and the resin, and further enhancing the dispersibility of the inorganic filler in the resin composition. As a result, the copolymer of the present embodiment can sufficiently reduce the viscosity of the resin composition containing the resin and the inorganic filler.

Examples of the (meth)acrylic based monomer include a (meth)acrylic based monomer having an oxyalkylene skeleton, such as ethoxycarbonylmethyl (meth)acrylate, phenol ethylene oxide-modified (meth)acrylate, phenol (2-mol ethylene oxide-modified) (meth)acrylate, phenol (4-mol ethylene oxide-modified) (meth)acrylate, p-cumylphenol ethylene oxide-modified (meth)acrylate, nonylphenol ethylene oxide-modified (meth)acrylate, nonylphenol (4-mol ethylene oxide-modified) (meth)acrylate, nonylphenol (8-mol ethylene oxide-modified) (meth)acrylate, nonylphenol (2.5-mol propylene oxide-modified) acrylate, 2-ethylhexylcarbitol (meth)acrylate, ethylene oxide-modified phthalic (meth)acrylate, ethylene

oxide-modified succinic (meth)acrylate, and tetrahydrofurfuryl (meth)acrylate; a (meth)acrylic based monomer in which the ester part thereof has an hydrocarbon skeleton, such as methyl (meth)acrylate, ethyl (meth)acrylate, propyl (meth)acrylate, butyl (meth)acrylate, 2-ethylhexyl (meth)acrylate, isooctyl (meth)acrylate, isodecyl (meth)acrylate, lauryl (meth)acrylate, stearyl (meth)acrylate, phenyl (meth)acrylate, cyclohexyl (meth)acrylate, dicyclopentanyl (meth)acrylate, dicyclopentenyl (meth)acrylate, dicyclopentenyloxyethyl (meth)acrylate, isobornyl (meth)acrylate, and methoxylated cyclodecatriene (meth)acrylate; a (meth)acrylic based monomer having a hydroxy group, such as 2-hydroxyethyl (meth)acrylate, 2-hydroxypropyl (meth)acrylate, 3-hydroxypropyl (meth)acrylate, 4-hydroxypropyl (meth)acrylate, 2-hydroxy-3-phenoxypropyl (meth)acrylate, and 3-chloro-2-hydroxypropyl (meth)acrylate; a (meth)acrylic based monomer having an amide bond, such as N,N-dimethyl(meth)acrylamide, N,N-diethyl(meth)acrylamide, N-isopropyl(meth)acrylamide, diacetone(meth)acrylamide, and acryloylmorpholine; a (meth)acrylic based monomer having a siloxane skeleton, such as α-butyl-ω-(3-methacryloxypropyl)polydimethylsiloxane; a (meth)acrylic based monomer having a phosphate diester skeleton, such as a (meth)acryloyloxyethyl dialkylphosphate; and a polyfunctional (meth)acrylic based monomer, such as 1,3-butylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dicyclopentanyl di(meth)acrylate, 2-ethyl-2-butylpropanediol (meth)acrylate, neopentyl glycol-modified trimethylolpropane di(meth)acrylate, stearic acid-modified pentaerythritol di(meth)acrylate, 2-(1,2-cyclohexacarboxyimide)ethyl (meth)acrylate, hexanediol di(meth)acrylate, a polyfunctional (meth)acrylate having a bisphenol structure, while not particularly limited. One kind of the unit C may be used alone, or two or more kinds thereof may be used in combination. Among these, a (meth)acrylic based monomer having a siloxane skeleton, such as α-butyl-ω-(3-methacryloxypropyl)polydimethylsiloxane, is preferred.

The weight average molecular weight of the (meth)acrylic based monomer C is 2,000 to 9,000. In the case where the weight average molecular weight of the (meth)acrylic based monomer C is less than 2,000, here may be a case where the affinity of the copolymer to the resin is insufficient, and the dispersibility of the inorganic filler is deteriorated. As a result, there may be a case where it is difficult to reduce the viscosity of the resin composition containing the resin and the inorganic filler. Additionally, in the case where the weight average molecular weight of the (meth)acrylic based monomer C exceeds 9,000, in some cases, the viscosity of the composition obtained by mixing the copolymer and the resin can be increased. From this standpoint, the weight average molecular weight of the (meth)acrylic based monomer C is preferably 2,500 to 7,000, more preferably 3,000 to 6,000, and further preferably 3,500 to 5,500. Note that the weight average molecular weight of the (meth)acrylic based monomer C is the weight average molecular weight of the (meth)acrylic based monomer unit C.

The content of the unit A is preferably 30 to 80% by mol, and more preferably 40 to 65% by mol, based on 100% by mol in total of the unit A, the unit B, and the unit C. In the case where the content of the unit A is 30% by mol or more, there is a tendency of further enhancing the affinity of the copolymer to the resin, and further enhancing the dispersibility of the inorganic filler. As a result, the copolymer of the present embodiment can sufficiently reduce the viscosity of the resin composition containing the resin and the inorganic filler. In the case where the content of the unit A is 80% by mol or less, the unit B and the unit C can be contained in the copolymer in the sufficient contents.

The content of the unit B is preferably 0.1 to 5% by mol, and more preferably 0.5 to 3% by mol, based on 100% by mol in total of the unit A, the unit B, and the unit C. In the case where the content of the unit B is 0.1% by mol or more, the affinity of the copolymer to the inorganic filler can be improved. In the case where the content thereof is 5% by mol or less, the unit A and the unit C can be contained in the copolymer in the sufficient contents.

The total content of the unit A and the unit B is preferably 30.1 to 85% by mol, and more preferably 35 to 75% by mol, based on 100% by mol in total of the unit A, the unit B, and the unit C. In the case where the total content of the unit A and the unit B is 30.1% by mol or more, there is a tendency of further enhancing the affinity of the copolymer to the resin, and further enhancing the dispersibility of the inorganic filler. In the case where the total content of the unit A and the unit B is 85% by mol or less, the unit C can be contained in the copolymer in the sufficient content.

The molar ratio of the unit A to the unit B is preferably 6 to 800, and more preferably 20 to 400. In the case where the molar ratio of the unit A to the unit B is in the range, there is a tendency of further enhancing the affinity of the copolymer to the resin, and further enhancing the dispersibility of the inorganic filler.

The content of the unit C is preferably 20 to 70% by mol, and more preferably 30 to 55% by mol, based on 100% by mol in total of the unit A, the unit B, and the unit C. In the case where the content of the unit C is 20% by mol or more, the handleability derived from the viscous behavior of the copolymer is improved. In the case where the content thereof is 70% by mol or less, the unit A and the unit B can be contained in the copolymer in the sufficient contents.

The weight average molecular weight of the copolymer is preferably 40,000 to 80,000, and more preferably 50,000 to 70,000. In the case where the weight average molecular weight of the copolymer is 40,000 or more, the inorganic filler is further unlikely aggregated through the steric hinderance repulsive force of the copolymer, and the dispersibility of the inorganic filler in the resin composition is further improved. In the case where the weight average molecular weight of the copolymer is 80,000 or less, the copolymer can be further easily dissolved in a resin and a solvent. The weight average molecular weight can be obtained by GPC (gel permeation chromatography).

The copolymer of the present embodiment is preferably a copolymer represented by the following general

formula (1). The copolymer represented by the general formula (1) may be either a random copolymer or a block copolymer. Note that the unit A in the copolymer represented by the following general formula (1) is derived from acrylic acid, and the anionic group is a carboxy group. Further, the unit B in the copolymer represented by the following general formula (1) is derived from 1,2,2,6,6-pentamethyl-4-piperidyl methacrylate, and the cationic group is a tertiary amino group. Furthermore, the unit C in the copolymer represented by the following general formula (1) is derived from α-butyl-ω-(3-methacryloxypropyl)polydimethylsiloxane, and has a siloxane skeleton.

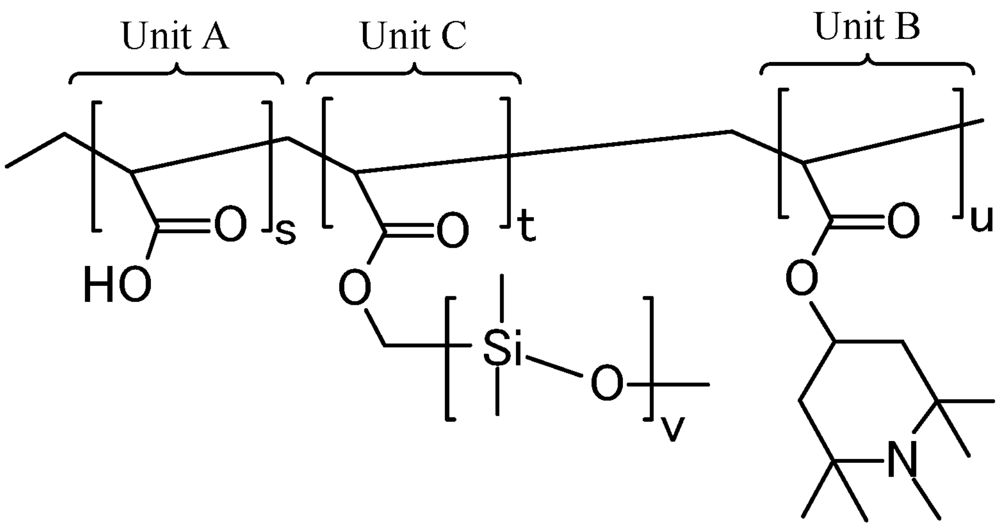

(1)

In the formula, s represents an integer that provides a content of the unit A of 30 to 80% by mol, based on 100% by mol in total of the unit A, the unit B, and the unit C, in the case where the weight average molecular weight of the copolymer is 40,000 to 80,000, t represents an integer that provides a content of the unit C of 20 to 70% by mol, based on 100% by mol in total of the unit A, the unit B, and the unit C, in the case where the weight average molecular weight of the copolymer is 40,000 to 80,000, u represents an integer that provides a content of the unit B of 0.1 to 5.0% by mol, based on 100% by mol in total of the unit A, the unit B, and the unit C, in the case where the weight average molecular weight of the copolymer is 40,000 to 80,000, and v represents an integer that provides a weight average molecular weight of the unit C of 2,000 to 9,000.

The copolymer of the present invention has good affinity to the resin, and is easily adsorbed to the inorganic filler, and therefore can be favorably used for a surface treatment of an inorganic filler contained in a resin composition used in a heat dissipation sheet. In particular, the copolymer of the present invention has a large number of anchoring parts adsorbing to an inorganic filler due to the relatively large weight average molecular weight thereof, and therefore has good adsorbability to an inorganic filler having a stable surface with poor reactivity, such as boron nitride. Therefore, the copolymer of the present invention can be more favorably used for a surface treatment of an inorganic filler having a stable surface, such as boron nitride. The surface treatment of the inorganic filler may be performed before mixing the inorganic filler and the resin. In mixing the inorganic filler and the resin, the copolymer may be mixed simultaneously, so as to perform the surface treatment of the inorganic filler at the time of mixing the inorganic filler and the resin.

(Production Method of Copolymer)

The production method of the copolymer of the present embodiment is not particularly limited, and a known polymerization method of a (meth)acrylic based monomer can be used. Examples of the polymerization method include radical polymerization and anionic polymerization. Among these, radical polymerization is preferred.

Examples of the thermal polymerization initiator used in the radical polymerization include an azo compound, such as azobisisobutyronitrile; and an organic peroxide, such as benzoyl peroxide, tert-butyl hydroperoxide, and di-tert-butyl peroxide, while not particularly limited. Additionally, examples of the photopolymerization initiator used in the radical polymerization include a benzoin derivative while not particularly limited. A known polymerization initiator used in living radical polymerization, such as ATRP and RAFT, may also be used.

The polymerization condition is not particularly limited, and may be appropriately regulated in consideration of the initiator used, the boiling point of the solvent, and the kinds of the monomers used.

The addition order of the monomers is not particularly limited, and for example, the monomers may be mixed and then polymerized from the standpoint of synthesizing a random copolymer, or the monomers may be sequentially added to the polymerization system from the standpoint of synthesizing a block copolymer.

[Surfactant]

The surfactant of the present embodiment contains the copolymer described above, and may contain a solvent and an optional additive depending on necessity. Moreover, the copolymer can be used alone as a surfactant, and added to a mixture of an inorganic filler and a resin.

The surfactant is used for the purpose of dispersing an inorganic filler homogeneously in a resin. The use thereof can prevent aggregation and sedimentation of the inorganic filler in the mixture of the inorganic filler and the resin, so as to enhance the stability thereof, and also enables the high density filling of the inorganic filler in the resin, and the reduction of the viscosity of the mixture. Furthermore, various effects derived from the enhancement of the dispersibility of the inorganic filler can also be obtained.

The surfactant of the present embodiment can disperse the inorganic filler through the electrostatic repulsive force of the copolymer, and can prevent the reaggregation of the inorganic filler. The copolymer also has an effect of enhancing the dispersibility through the steric hinderance repulsive force. Examples of the resin include materials contained in the resin composition described later while not particularly limited.

[Resin Composition]

The resin composition of the present embodiment contains a resin, the copolymer described above, and an inorganic filler, and may contain a solvent and an optional additive depending on necessity. The resin composition of the present embodiment contains an inorganic filler dispersed in a resin with the copolymer.

The content of the copolymer is preferably 0.01 to 15% by volume, and more preferably 0.1 to 10% by volume, based on 100% by volume in total of the resin, the inorganic filler, and the copolymer. In the case where the content of the copolymer is 0.01% by volume or more, there is a tendency of further enhancing the dispersibility of the inorganic filler. In the case where the content of the copolymer is 15% by volume or less, there is a tendency of further enhancing the thermal conductivity of the resin composition.

Examples of the inorganic filler include an inorganic filler having electroconductivity and/or thermal conductivity while not particularly limited. Examples of the inorganic filler include one or more kind selected from boron nitride powder, aluminum nitride powder, aluminum oxide powder, silicon nitride powder, silicon oxide powder, magnesium oxide powder, metallic aluminum powder, and zinc oxide powder. Among these, boron nitride powder and aluminum oxide powder are preferred, and boron nitride powder is more preferred. The use of such an inorganic filler provides a tendency of further enhancing the electroconductivity and/or the thermal conductivity of the resin composition. In addition, the combination use of the inorganic filler and the polymer enables the high density filling of the inorganic filler in the resin composition, and thereby can further enhance the electroconductivity and/or the thermal conductivity thereof, which are enhanced depending on the amount of the inorganic filler filled therein.

The average particle diameter of the inorganic filler is preferably 0.4 to 120 $\mu$m, and more preferably 5 to 80 $\mu$m. In the case where the average particle diameter of the inorganic filler is 0.4 $\mu$m or more, the thermal conductivity and the oil bleed resistance can be improved. In the case where the average particle diameter thereof is 120 $\mu$m or less, the moldability of the composition having the inorganic filler filled therein can be improved.

The inorganic filler may be a mixture of inorganic fillers having multiple average particle diameters. As compared to the case where an inorganic filler only having a single average particle diameter is used, the combination use with an inorganic filler having a smaller average particle diameter enables that the gaps among the inorganic filler having a larger diameter are filled with the inorganic filler having a smaller diameter. Therefore, the use of the mixture of inorganic fillers having multiple average particle diameters enables the higher density filling of the inorganic filler in the resin composition. In the case where an inorganic filler is filled in a higher density in this manner, in general, there may be problems that the viscosity is considerably increased to deteriorate the handleability, and the inorganic filler cannot be homogeneously dispersed. On the other hand, the use of the copolymer described above can prevent the problems caused by the higher density filling. Consequently, the electroconductivity and/or the thermal conductivity, which are enhanced depending on the amount of the inorganic filler filled therein, can be further enhanced.

The content of the inorganic filler is preferably 20 to 90% by volume, and more preferably 25 to 85% by volume, based on 100% by volume in total of the resin, the inorganic filler, and the copolymer. In the case where the content of the inorganic filler is 20% by volume or more, there is a tendency of further enhancing the electroconductivity and/or the thermal conductivity. In the case where the content of the inorganic filler is 90% by volume or less, the dispersibility of the inorganic filler in the resin composition can be improved.

Examples of the resin include a thermosetting resin, such as a silicone resin, an epoxy resin, a phenol resin, a cyanate resin, a melamine resin, a urea resin, a thermosetting polyamide, and an unsaturated polyester resin; and a thermoplastic resin, such as an acrylic resin, a polyolefin resin, a polycarbonate resin, a polyester resin, a vinyl chloride resin, a urethane resin, a polyamide resin, and an ABS (acrylonitrile-butadiene-styrene) resin, while not particularly limited. Among these, one or more kind of a resin selected from the group consisting of a silicone resin and an epoxy

resin is preferred.

Examples of the optional additive include a silane coupling agent, an antioxidant, and a metal corrosion inhibitor, while not particularly limited.

The resin composition of the present embodiment can be produced by kneading with a planetary agitator, a universal mixer-agitator, a kneader, a hybrid mixer, or the like.

[Heat Dissipation Sheet]

The heat dissipation sheet of the present embodiment contains the resin composition of the present invention. According to the configuration, the thermal conductivity of the heat dissipation sheet can be enhanced. The heat dissipation member of the present embodiment is disposed, for example, between an electronic component and a heatsink. According to the configuration, a gap can be prevented from occurring between the electronic component and the heatsink. As a result, the heat generated by the electronic component can be efficiently transferred to the heatsink.

Examples of the electronic component include a circuit board used in a motor, a battery pack, and an in-vehicle power supply system, and a heat-generating electronic component, such as a power transistor and a microprocessor, while not particularly limited. Among these, an electronic component used in an in-vehicle power supply system is preferred. The heatsink is not particularly limited, as long as being a component constituted for the purpose of dissipating or absorbing heat.

Examples

The present invention will be described more specifically with reference to examples and comparative examples below. The present invention is not limited to the examples.

<Monomers for preparing Copolymers>

The following materials were used for polymerizing the copolymers of the examples.

((Meth)acrylic based Monomer A having Anionic Group)

(A-1) Acrylic acid, available from Toagosei Co., Ltd.

((Meth)acrylic based Monomer B having Cationic Group)

(B-1) 1,2,2,6,6-Pentamethyl-4-piperidyl methacrylate, "Adeka Stab LA-82", available from Adeka Corporation

(Meth)acrylic based Monomer C)

(C-1) α-Butyl-ω-(3-methacryloxypropyl)polydimethylsiloxane, "Silaplane FM-0721", available from JNC Corporation, weight average molecular weight: 5,000

(C-2) α-Butyl-ω-(3-methacryloxypropyl)polydimethylsiloxane, "Silaplane FM-0725", available from JNC Corporation, weight average molecular weight: 10,000

<Preparation of Copolymers>

(Copolymer 1)

The copolymer was prepared in the following manner. 100 parts by mass of a (meth)acrylic based monomer containing 48.4% by mol of acrylic acid, 1.6% by mol of 1,2,2,6,6-pentamethyl-4-piperidyl methacrylate, 50.0% by mol of α-butyl-ω-(3-methacryloxypropyl)polydimethylsiloxane (weight average molecular weight: 5,000) was placed in an autoclave equipped with an agitator. Subsequently, 0.05 part by mass of azobisisobutyronitrile (available from Tokyo Kasei Kogyo Co., Ltd.) as an initiator and 1,000 parts by mass of a mixed solution of toluene (guaranteed reagent) and 2-propanol (guaranteed reagent) at a volume ratio of 7/3 as a solvent per 100 parts by mass in total of the (meth)acrylic based monomers were added thereto, and the interior of the autoclave was purged with nitrogen. Thereafter, radical polymerization was performed by heating the autoclave to 65°C for 20 hours in an oil bath. After completing the polymerization, the interior was evacuated under reduced pressure at 120°C for 1 hour to provide a copolymer 1. The weight average molecular weight of α-butyl-ω-(3-methacryloxypropyl)polydimethylsiloxane was 5,000, and thus the weight average molecular weight of the unit C was 5,000.

The polymerization degree with respect to 100% of the charged amount of the monomers analyzed by gas chromatography was 98% or more. It was estimated therefrom that the ratio of the monomer units of the copolymer was equivalent to the charged ratio of the monomers.

The weight average molecular weight of the resulting copolymer 1 was obtained in terms of standard polystyrene conversion weight average molecular weight by the GPC (gel permeation chromatography) method. Note that the measurement condition was as follows.

High-speed GPC device: "HLC-8020", available from Tosoh Corporation
Columns: "TSK Guardcolumn MP(XL)" 6.0 mmm ID × 4.0 cm, available from Tosoh Corporation, × 1, and "TSK-Gelmultipore HXL-M" 7.8 mm ID × 30.0 cm (theoretical plate number: 16,000), available from Tosoh Corporation, × 2, i.e., three columns in total (total theoretical plate number: 32,000)
Developing solvent: tetrahydrofuran
Detector: RI (differential refractive index detector)

(Copolymer 2)

Radical polymerization was performed in the same manner as in the copolymer 1 except that in the (meth)acrylic based monomers, the proportion of the acrylic acid was changed from 48.4% by mol to 67.7% by mol, the weight average molecular weight of 1,2,2,6,6-pentamethyl-4-piperidyl methacrylate was changed from 5,000 to 10,000, the proportion of 1,2,2,6,6-pentamethyl-4-piperidyl methacrylate was changed from 1.6% by mol to 2.3% by mol, and the proportion of α-butyl-ω-(3-methacryloxypropyl)polydimethylsiloxane was changed from 50.0% by mol to 30.0% by mol, so as to provide a copolymer 2. The polymerization degree of the resulting copolymer 2 was 98% or more, from which it was estimated that the ratio of the monomer units of the copolymer was equivalent to the charged ratio of the monomers. Further, the weight average molecular weight was obtained in the same manner as above. Note that the weight average molecular weight of α-butyl-ω-(3-methacryloxypropyl)polydimethylsiloxane was 10,000, and thus the weight average molecular weight of the unit C was 10,000.

(Copolymer 3)

A high-molecular weight amine compound ("Esleam AD-374M", available from NOF Corporation) was used as a copolymer 3.

(Copolymer 4)

A high-molecular weight carboxylic acid ("Malialim AAB-0851 ", available from NOF Corporation) was used as a copolymer 4.

Note that the compositions of the monomers shown in Table 1 are shown in terms of molar ratio (%). The molar ratio was calculated based on the addition amount and the molecular weight of each of the monomers. In addition, the molar ratio of α-butyl-ω-(3-methacryloxypropyl)polydimethylsiloxane was calculated based on the weight average molecular weight.

The compositions and the weight average molecular weights of the copolymers 1 and 2 synthesized as above are shown in Table 1.

<Materials for preparing Resin Compositions>

(Resin)

Silicone resin: "TSE3033(A)", available from Momentive Performance Materials, Inc.
Epoxy resin: "jER (registered trade name) 806", available from Mitsubishi Chemical Corporation

(Inorganic Filler)

Boron nitride 1: "HGP", available from Denka Co., Ltd., average particle diameter: 6 μm
Boron nitride 2: "SGPS", available from Denka Co., Ltd., average particle diameter: 20 μm
Boron nitride 3: "FP40", available from Denka Co., Ltd., average particle diameter: 40 μm

The average particle diameter of the inorganic filler was measured with "Laser Diffraction Particle Size Distribution Analyzer SALD-20", available from Shimadzu Corporation. An evaluation specimen was prepared in such a manner that 50 mL of pure water and 5 g of the inorganic filler to be measured were placed in a glass beaker, which were agitated with a spatula, and then subjected to a dispersion treatment with an ultrasonic bath for 10 minutes. The dispersion liquid of the inorganic filler obtained through the dispersion treatment was added to the sampler of the analyzer drop by drop, and the measurement was performed after the absorbance was stabilized. The average particle diameter was in terms of D50 (median diameter).

<Preparation of Resin Compositions>

(Resin Composition 1)

The boron nitride 1, the silicone resin, and the copolymer 1 were weighed to make a proportion of the boron nitride 1 of 70% by volume, a proportion of the silicone resin of 27% by volume, and a proportion of the copolymer 1 of 3% by volume, and added to a universal mixer. Subsequently, the materials were mixed in the universal mixer in vacuum under heating at 150°C for 3 hours at an absolute pressure of 100 Pa or less, so as to prepare a resin composition 1. The evaluation of the resulting resin composition 1 is shown in Table 2.

(Resin Compositions 2 to 16)

Resin compositions 2 to 16 each were prepared in the same manner as in the resin composition 1 except that the components and the compositions shown in Tables 2 to 5 were used. The evaluations of the resulting resin compositions 2 to 16 were shown in Tables 2 to 5.

<Production of Heat Dissipation Sheet>

[Production Method of Heat Dissipation Sheet]

The resin composition was molded into a sheet form by the doctor blade method to produce a resin composition sheet. The resin composition sheet was heated and pressurized in vacuum at a heating temperature of 120°C, a pressure of 5 MPa, and a time of heating and pressurizing of 30 minutes, so as to produce a heat dissipation sheet.

The properties of the resin composition were measured in the following manner.

[Viscosity of Resin Composition]

In a rotary rheometer MARS III, available from Thermo Scientific, equipped with a parallel plate having a diameter of 35 mm as an upper jig, and a lower plate having a diameter of 35 mm capable of being regulated in temperature with a Peltier device, the resin composition was placed on the lower plate and pressed with the upper jig to 1 mm, and after scraping off the protruding part, the resin composition was measured at 25°C. The viscosity was measured at a shear rate of 1 to 10 $s^{-1}$, and the viscosity at a shear rate of 10 $s^{-1}$ was used for evaluation.

The properties of the heat dissipation sheet were measured in the following manner.

[Thermal Conductivity of Heat Dissipation Sheet]

The heat dissipation sheet was held between a copper jig in a rectangular parallelepiped form having a heated embedded therein with an end part of 100 $mm^2$ (10 mm × 10 mm) and a copper jig in a rectangular parallelepiped form having a cooling fin with an end part of 100 $mm^2$ (10 mm × 10 mm), and measured for the thermal resistance, and the thermal conductivity was calculated from the gradient of the thermal resistance and the thickness, and evaluated. The thermal resistance was measured in such a manner that in applying electric power of 10 W to the heater for 30 minutes, the temperature difference (°C) between the copper jigs was measured, and the thermal resistance was calculated according to the following expression.

$$\text{Thermal resistance (°C/W)} = (\text{temperature difference (°C)}/\text{electric power (W)})$$

Table 1

| | | | | Copolymer 1 | Copolymer 2 |
|---|---|---|---|---|---|
| | | | | Example | Comparative Example |
| Unit A | (A-1) | Acrylic acid | % by mol | 48.4 | 67.7 |
| Unit B | (B-1) | 1,2,2,6,6-Pentamethyl-4-piperidyl methacrylate | | 1.6 | 2.3 |
| Unit C | (C-1) | α-Butyl-ω-(3-methacryloxypropyl) polydimethylsiloxane | | 50 | - |
| | (C-2) | α-Butyl-ω-(3-methacryloxypropyl) polydimethylsiloxane | | - | 30 |
| Weight average molecular weight of unit C | | | | 5,000 | 10,000 |
| Weight average molecular weight of copolymer | | | | 65000 | 85000 |

Table 2

| | | | | Resin Composition 1 | Resin Composition 2 | Resin Composition 3 | Resin Composition 4 |
|---|---|---|---|---|---|---|---|
| | | | | Example | Comparative Example | Comparative Example | Comparative Example |
| Resin composition | Copolymer No. | | | 1 | 2 | 3 | 4 |
| | Copolymer | | % by volume | 7 | 7 | 7 | 7 |
| | Resin species | Silicone resin | | 63 | 63 | 63 | 63 |
| | | Epoxy resin | | - | - | - | - |
| | Inorganic filler | Boron nitride (average particle diameter: 6 μm) | | 30 | 30 | 30 | 30 |
| | | Boron nitride (average particle diameter: 20 μm) | | - | - | - | - |
| | | Boron nitride (average particle diameter: 40 μm) | | - | - | - | - |
| Viscosity of resin composition | | | mPa·s | 80 | 195 | 220 | 235 |
| Thermal conductivity of heat dissipation sheet | | | W/mK | 1.8 | 1.5 | 1.4 | 1.4 |

Table 3

| | | | | Resin Composition 5 | Resin Composition 6 | Resin Composition 7 | Resin Composition 8 |
|---|---|---|---|---|---|---|---|
| | | | | Example | Comparative Example | Comparative Example | Comparative Example |
| Resin composition | Copolymer No. | | | 1 | 2 | 3 | 4 |
| | Copolymer | | % by volume | 7 | 7 | 7 | 7 |
| | Resin species | Silicone resin | | 63 | 63 | 63 | 63 |
| | | Epoxy resin | | - | - | - | - |
| | Inorganic filler | Boron nitride (average particle diameter: 6 μm) | | - | - | - | - |
| | | Boron nitride (average particle diameter: 20 μm) | | 30 | 30 | 30 | 30 |
| | | Boron nitride (average particle diameter: 40 μm) | | - | - | - | - |
| Viscosity of resin composition | | | mPa·s | 35 | 106 | 120 | 130 |
| Thermal conductivity of heat dissipation sheet | | | W/mK | 2.7 | 2.3 | 2.1 | 1.9 |

Table 4

| | | | | Resin Composition 9 | Resin Composition 10 | Resin Composition 11 | Resin Composition 12 |
|---|---|---|---|---|---|---|---|
| | | | | Example | Comparative Example | Comparative Example | Comparative Example |
| Resin composition | Copolymer No. | | | 1 | 2 | 3 | 4 |
| | Copolymer | | % by volume | 7 | 7 | 7 | 7 |
| | Resin species | Silicone resin | | 63 | 63 | 63 | 63 |
| | | Epoxy resin | | - | - | - | - |
| | Inorganic filler | Boron nitride (average particle diameter: 6 μm) | | - | - | - | - |
| | | Boron nitride (average particle diameter: 20 μm) | | - | - | - | - |
| | | Boron nitride (average particle diameter: 40 μm) | | 30 | 30 | 30 | 30 |
| Viscosity of resin composition | | | mPa·s | 53 | 140 | 158 | 203 |
| Thermal conductivity of heat dissipation sheet | | | W/mK | 3.5 | 2.8 | 2.7 | 2.4 |

Table 5

| | | | | Resin Composition 13 | Resin Composition 14 | Resin Composition 15 | Resin Composition 16 |
|---|---|---|---|---|---|---|---|
| | | | | Example | Comparative Example | Comparative Example | Comparative Example |
| Resin composition | Copolymer No. | | | 1 | 2 | 3 | 4 |
| | Copolymer | | % by volume | 7 | 7 | 7 | 7 |
| | Resin species | Silicone resin | | - | - | - | - |
| | | Epoxy resin | | 63 | 63 | 63 | 63 |
| | Inorganic filler | Boron nitride (average particle diameter: 6 μm) | | - | - | - | - |
| | | Boron nitride (average particle diameter: 20 μm) | | - | - | - | - |
| | | Boron nitride (average particle diameter: 40 μm) | | 30 | 30 | 30 | 30 |
| Viscosity of resin composition | | | mPa·s | 65 | 98 | 110 | 103 |
| Thermal conductivity of heat dissipation sheet | | | W/mK | 4.4 | 3.6 | 3.5 | 3.7 |

The resin compositions 1, 5, 9, and 13 in Examples each use the copolymer containing the (meth)acrylic based monomer unit A having an anionic group, the (meth)acrylic based monomer unit B having a cationic group, and the (meth)acrylic based monomer unit C other than the (meth)acrylic based monomer unit A and the (meth)acrylic based monomer unit B, in which the (meth)acrylic based monomer unit C has a weight average molecular weight of 2,000 to 9,000, and therefore the viscosity thereof can be significantly reduced as compared to Comparative Examples. On the other hand, in the resin compositions 2, 6, 10, and 14 in Comparative Examples, the weight average molecular weight of the (meth)acrylic based monomer unit C is larger than 9,000, and therefore the viscosity thereof cannot be largely reduced. Further, the copolymers used in the resin compositions 3, 4, 7, 8, 11, 12, 15, and 16 in Comparative Examples, each are not the copolymer containing the (meth)acrylic based monomer unit A having an anionic group, the (meth)acrylic based monomer unit B having a cationic group, and the (meth)acrylic based monomer unit C other than the (meth)acrylic based monomer unit A and the (meth)acrylic based monomer unit B, and therefore the viscosity thereof cannot be largely reduced.

## Claims

1. A copolymer comprising

   a (meth)acrylic based monomer unit A having an anionic group,
   a (meth)acrylic based monomer unit B having a cationic group, and
   a (meth)acrylic based monomer unit C other than the (meth)acrylic based monomer unit A and the (meth)acrylic based monomer unit B,
   the (meth)acrylic based monomer unit C having a weight average molecular weight of 2,000 to 9,000.

2. The copolymer according to claim 1, wherein the copolymer has

   a content of the (meth)acrylic based monomer unit A of 30 to 80% by mol based on 100% by mol in total of the (meth)acrylic based monomer unit A, the (meth)acrylic based monomer unit B, and the (meth)acrylic based monomer unit C,
   a content of the (meth)acrylic based monomer unit B of 0.1 to 5.0% by mol based on 100% by mol in total of the (meth)acrylic based monomer unit A, the (meth)acrylic based monomer unit B, and the (meth)acrylic based monomer unit C, and
   a content of the (meth)acrylic based monomer unit C of 20 to 70% by mol based on 100% by mol in total of the (meth)acrylic based monomer unit A, the (meth)acrylic based monomer unit B, and the (meth)acrylic based monomer unit C.

3. The copolymer according to claim 1 or 2, wherein the copolymer has a weight average molecular weight of 40,000 to 80,000.

4. The copolymer according to any one of claims 1 to 3, wherein the (meth)acrylic based monomer unit C contains at least one kind of a skeleton selected from the group consisting of an oxyalkylene skeleton, a siloxane skeleton, a hydrocarbon skeleton, and a phosphodiester skeleton.

5. The copolymer according to any one of claims 1 to 4, wherein the anionic group contains at least one kind of a group selected from the group consisting of a carboxy group, a phosphate group, and a phenolic hydroxy group.

6. The copolymer according to any one of claims 1 to 5, wherein the cationic group contains at least one kind of a group selected from the group consisting of a primary amino group, a secondary amino group, a tertiary amino group, and a quaternary ammonium salt.

7. The copolymer according to any one of claims 1 to 6, wherein the copolymer is for a surface treatment of an inorganic filler contained in a resin composition used in a heat dissipation sheet.

8. The copolymer according to claim 7, wherein the inorganic filler is boron nitride.

9. A surfactant comprising the copolymer according to any one of claims 1 to 8.

10. A resin composition comprising a resin, the surfactant according to claim 9, and an inorganic filler.

**11.** The resin composition according to claim 10, wherein the resin is at least one kind of a resin selected from a silicone resin and an epoxy resin.

**12.** The resin composition according to claim 10 or 11, wherein the inorganic filler is boron nitride.

**13.** A heat dissipation sheet comprising the resin composition according to any one of claims 10 to 12.

**INTERNATIONAL SEARCH REPORT**

International application No.
**PCT/JP2022/041838**

**A. CLASSIFICATION OF SUBJECT MATTER**

***C08F 290/06***(2006.01)i; ***C08K 3/013***(2018.01)i; ***C08K 3/38***(2006.01)i; ***C08L 55/00***(2006.01)i; ***C08L 63/00***(2006.01)i; ***C08L 83/04***(2006.01)i
FI: C08F290/06; C08K3/013; C08K3/38; C08L55/00; C08L63/00 C; C08L83/04

According to International Patent Classification (IPC) or to both national classification and IPC

**B. FIELDS SEARCHED**

Minimum documentation searched (classification system followed by classification symbols)

C08F290/06; C08K3/013; C08K3/38; C08L55/00; C08L63/00; C08L83/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/209263 A1 (DENKA CO., LTD.) 15 October 2020 (2020-10-15) claims 1, 13-16, paragraphs [0021], [0045], [0046]-[0054], examples 13-16 | 1-13 |
| A | JP 2011-214000 A (SEKISUI PLASTICS CO., LTD.) 27 October 2011 (2011-10-27) paragraphs [0012], [0098] | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2023** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/041838**

| Patent document cited in search report | Publication date (day/month/year) | Patent family member(s) | Publication date (day/month/year) |
|---|---|---|---|
| WO 2020/209263 A1 | 15 October 2020 | US 2022/0186089 A1<br>claims 1, 13-16, paragraphs [0047], [0071], [0072]-[0080], examples 13-16 | |
| JP 2011-214000 A | 27 October 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000233907 A